# FASCICULE DE BREVET EUROPEEN

(11) **EP 1 765 607 B1**
(45) Date de publication et mention de la délivrance du brevet: **09.04.2008**
(21) Numéro de dépôt: 05747604.6
(22) Date de dépôt: 10.06.2005
(51) Int. Cl.: B60C 13/00

(54) **FIXATION D'UNE APPLIQUE SUR UN PNEUMATIQUE PAR L'ENTREMISE D'UN TISSU**
BEFESTIGUNG EINES OBERFLÄCHENELEMENTS AN EINEM REIFEN ÜBER EIN GEWEBE
FIXING A SURFACE ELEMENT ON A TYRE VIA A FABRIC

(30) Priorité: 01.07.2004 FR 0407325
(43) Date de publication de la demande: 28.03.2007
(73) Titulaire: Societe de Technologie Michelin STM, 63000 Clermont-Ferrand (FR); Michelin Recherche et Technique S.A., 1763 Granges-Paccot (CH)
(72) Inventeur: COTTIN, Alain, F-63100 Clermont-Ferrand (FR); PEYRON, Georges, F-63200 Riom (FR)
(74) Mandataire: Dequire, Philippe Jean-Marie Denis
(86) Numéro de dépôt international: PCT/EP2005/006232
(87) Numéro de publication internationale: WO 2006/012942

(56) Documents cités:
- US-A- 5 824 397
- PATENT ABSTRACTS OF JAPAN vol. 006, no. 020 (M-110), 5 février 1982 (1982-02-05) -& JP 56 138007 A (BRIDGESTONE CORP), 28 octobre 1981 (1981-10-28)

## Description

L'invention concerne l'application d'appliques et/ou d'éléments à la surface d'articles en caoutchouc, notamment les pneumatiques. Plus particulièrement, elle concerne l'application de ces éléments et/ou revêtements après la vulcanisation de ces articles. L'invention concerne notamment le marquage, coloré ou non, d'une partie de la surface d'un pneumatique par application d'un élément rigide ou non rigide et/ou d'un revêtement.

Les pneumatiques peuvent porter, à des fins décoratives ou d'identification, un marquage, coloré ou non, directement appliqué sur une partie de la surface généralement extérieure du pneumatique. On entend par "marquage" dans le texte, tout élément ou revêtement apposé sur ladite surface du pneumatique, généralement après sa vulcanisation. Ce marquage peut-être constitué d'un élément dit rigide, d'un élément mou, d'une couche de vernis, d'une couche de peinture, etc.

On entend par "élément rigide", des éléments incapables de suivre les déformations successives d'un pneumatique lors de son roulage. Ces éléments dits rigides peuvent être selon le cas, totalement indéformables ou encore souples mais non élastiques à l'échelle des déformations du pneumatique. En d'autres termes, ils peuvent, le cas échéant, se plier mais être incapables de suivre les variations locales de l'aire de la surface du pneumatique consécutives aux changements de rayons de courbure dudit pneumatique. Ces éléments peuvent être constitués de métal, de plastique, d'élastomère, de céramique, etc.

Le marquage d'un pneumatique, réalisé en un matériau approprié, peut être d'une ou de plusieurs couleurs y compris le blanc.

Or, la réalisation de marquages, colorés ou non, sur des pneumatiques pose de grandes difficultés.

De tels marquages sont destinés à recouvrir au moins une partie de la surface de pneumatiques. Dans la mesure où il s'agit d'une couverture de surface, ces marquages sont plus particulièrement destinés à recouvrir des surfaces d'enveloppes de pneumatiques dites "non usantes", c'est-à-dire qui ne sont pas au contact de la route dans des conditions normales d'utilisation desdits pneumatiques. Ainsi, de tels marquages colorés ayant des fins notamment décoratives et d'identification, pourront constituer au moins partiellement la surface extérieure d'un flanc d'enveloppe de pneumatique ou des fonds de sculptures de la bande de roulement.

La complexité de revêtir directement la surface de pneumatiques de tels marquages est bien connue de l'homme de l'art. Il existe en effet, deux difficultés majeures à cette réalisation, d'une part la nature des compositions dans le pneumatique qui agit sur les marquages comme on va le voir plus explicitement dans ce qui suit et, d'autre part, les sollicitations auxquelles est soumis le pneumatique lors de son roulage qui entraînent des déformations importantes du pneumatique et donc de sa surface, auxquelles les marquages doivent pouvoir s'adapter.

Les vulcanisats de caoutchoucs diéniques, naturels comme synthétiques, en raison de la présence de doubles liaisons sur leurs chaînes moléculaires, sont susceptibles de se détériorer plus ou moins rapidement après une exposition prolongée à l'atmosphère, en raison de mécanismes connus d'oxydation et d'ozonolyse. Ces mécanismes de dégradation sont en outre accélérés sous l'action conjuguée de la chaleur par thermo-oxydation, ou encore de celle de la lumière par photo-oxydation (voir par exemple : "Photo-oxydation and stabilisation of polymers", Trends in Polym. Sci., Vol. 4, No 3, 1996, 92-98 ; "Degradation mechanisms of rubbers", Int. Polym. Sci. and Technol., Vol 22, No 12, 1995, 47-57).

Tous ces phénomènes de dégradation du pneumatique, liés à son vieillissement, ont pu être peu à peu inhibés grâce à la mise au point et à l'introduction dans les compositions de caoutchouc diénique destinées à la fabrication de pneumatiques, de divers agents antidégradants tels que des agents antioxydants ou antiozonants. On a même trouvé des composés pouvant remplir simultanément ces deux fonctions ; les plus efficaces, à la fois comme antioxydants et antiozonants, sont de manière connue des dérivés de la quinoléine, comme par exemple la 2,2,4-triméthyl-1,2-dihydroquinoléine ("TMQ") ou des dérivés de la p-phénylènediamine ("PPD") encore plus actifs que les premiers, tels que par exemple la N-1,3-diméthylbutyl-N'-phényl-p-phénylènediamine ("6-PPD") ou la N-isopropyl-N'-phényl-p-phénylènediamine ("I-PPD"). Ces antidégradants type TMQ et PPD, parfois même associés, sont aujourd'hui très répandus et utilisés de manière quasi-systématique dans les compositions de caoutchouc diéniques conventionnelles chargées au moins en partie de noir de carbone leur donnant leur couleur noire caractéristique.

Or, les agents cités ci-dessus, et en particulier les dérivés TMQ ou PPD, ne sont pas stables à la lumière et, sous l'effet du rayonnement U.V., génèrent des espèces chimiques colorées qui provoquent une altération de la couleur des compositions de caoutchouc les contenant, les tachant de brun sombre.

En outre, les agents antidégradants sont mobiles à l'échelle moléculaire au sein de la composition de caoutchouc les contenant. Cette mobilité s'étend aux compositions adjacentes à celle contenant initialement les agents antidégradants. Ainsi, ces agents antidégradants sont susceptibles de migrer dans une composition de marquage colorée, apposée sur la composition de caoutchouc les contenant, et de la tâcher.

Par ailleurs, pour limiter la dégradation due à l'ozone, les compositions élastomériques incorporent également couramment des cires qui apportent, en statique, un complément de protection par rapport aux agents anti-ozonants par la formation d'un revêtement protecteur en surface. Cependant les cires qui se caractérisent également par leur aptitude à migrer jusqu'à la surface des articles en caoutchouc, modifient l'aspect extérieur des surfaces des compositions élastomériques en les tâchant ou en les rendant ternes et grises. On appelle ce phénomène l'"efflorescence" des cires.

C'est pourquoi, il est fort complexe réaliser un marquage d'aspect durable, coloré ou non, destiné à recouvrir une partie de la surface extérieure d'enveloppes de pneumatiques résistant au tâches et à l'altération due aux agents antioxydants, anti-ozonants et aux cires présents dans les compositions élastomériques utilisées dans les pneumatiques.

La plupart des solutions proposent la mise au point de marquage de couleur dont la composition réunit à la fois les divers constituants permettant l'obtention de la couleur et la non migration de cires ou de produits tachants. Mais il est également nécessaire comme on l'a dit que le marquage soit capable d'endurer les sollicitations mécaniques auxquelles le pneumatique est soumis.

Or les solutions, accessibles aujourd'hui, à ces deux problèmes sont souvent antagonistes et ne sont donc pas satisfaisantes pour améliorer le compromis aspect durable / résistance aux sollicitations mécaniques. En effet,
- lorsque le revêtement est suffisamment souple pour s'accommoder des déformations répétées tout au long de la vie du pneumatique, les mobilités moléculaires y sont trop importantes pour empêcher totalement les migrations des produits tachant ;
- lorsque le revêtement est rigide, freinant ainsi la mobilité moléculaire, il n'est plus capable de suivre les déformations du pneumatique sans provoquer des concentrations de contraintes trop importantes qui selon le cas se traduiront par un détachement ou une rupture du revêtement.

Le document JP 56138007 A décrit un pneumatique selon le préambule de la revendication 1.

Il s'avère donc nécessaire pour obtenir un marquage durable, de pouvoir au moins réduire, voire supprimer, l'altération de la couleur et/ou de la brillance du marquage apposé sur la surface extérieure d'un pneumatique, tout en lui conférant une capacité de s'accommoder des déformations du pneumatique.

La demanderesse a découvert de façon surprenante qu'une autre façon de résoudre à la fois le problème d'ordre chimique et le problème d'ordre mécanique liés au marquage d'un pneumatique, consiste à intercaler entre la partie de la surface du pneu à marquer et l'élément ou/et le revêtement de marquage une couche de tissus, notamment de tricot biélastique. La couche de tricot biélastique et l'élément ou/et le revêtement de marquage forment ainsi un empilement de marquage appelé ci-après dans le texte, applique.

Par ailleurs, on cherche de plus en plus à stocker des informations sur des puces électroniques intégrées ou fixées au pneumatique, et à opérer des mesures notamment surveillance de pression et/ou de température qui nécessitent l'emploi de capteurs ou d'autres systèmes de connexion, de communication, de transmission ou de réception de signaux. Ces dispositifs qui nécessitent des supports rigides, posent de réels problèmes de fixation sur le pneumatique puisqu'ils ne peuvent suivre les déformations du pneumatique.

C'est pourquoi la solution apportée par l'invention permet également de surmonter les problèmes de fixation de ces dispositifs sur le pneu.

En conséquence un premier objet de l'invention consiste en un pneumatique comprenant sur au moins une partie de sa surface au moins une applique, caractérisé en ce que ladite applique est composée d'une première couche en contact avec l'air constituant la couche supérieure de l'applique et d'une deuxième couche en contact avec le pneumatique constituant la couche inférieure de l'applique, ladite couche inférieure de l'applique étant constituée d'un tissus biélastique. Ledit tissu utilisé est un tricot biélastique, c'est-à-dire un tissu à mailles dont les boucles formant les mailles sont susceptibles de se déplacer les unes par rapport aux autres dans le sens du tricotage et dans le sens perpendiculaire au tricotage.

Par biélastique, on entend que le matériau en question possède des propriétés le rendant élastique dans au moins deux directions sensiblement perpendiculaires, et de préférence dans toutes les directions.

L'utilisation de fibres élastomériques pour réaliser ce tissus ou tricot n'est donc pas indispensable. Leur utilisation serait même plutôt déconseillée lorsque le but principal est de d'empêcher les migrations. On peut éventuellement en mettre un peu pour favoriser la mise en oeuvre et faciliter le retour élastique.

Si toutefois on ne souhaite qu'un découplage mécanique, l'utilisation d'une matrice élastomérique peut permettre d'amplifier la capacité de découplage.

Le terme de tissus biélastique recouvre des structures qui ont la possibilité de se déformer élastiquement, de manière réversible mais qui ne sont pas forcément obtenus par tricotage. Ce peuvent être en particulier des structures obtenues au crochet ou des assemblages sous forme de bouclettes ou des aiguilletés.

La solution apportée par les inventeurs d'intercaler un tricot élastique entre la surface du pneumatique et l'élément et/ou le revêtement de marquage, permet un découplage chimique pour éviter les échanges chimiques par migration et donc le tachage dudit revêtement et/ou élément, sans qu'il soit nécessaire que ce dernier possède lui-même des caractéristiques d'imperméabilité, et à réaliser simultanément un découplage mécanique afin de préserver la fixation dudit revêtement et/ou élément et sa forme.

L'entrelacement des boucles forme un réseau déformable de manière élastique dans deux directions sensiblement perpendiculaires. Dans le cas avantageux où on utilise un tricot biélastique, la capacité de déformation de ce tricot biélastique selon l'invention résulte en particulier de la structure en tricot, les fibres constituant le tricot glissant les unes par rapport aux autres dans le réseau maillé. De manière générale, le taux d'allongement élastique du tricot biélastique selon l'invention est d'au moins 10% dans au moins une des deux directions d'allongement. Il est avantageusement de 50% ou plus, voire plus particulièrement de 100% ou plus.

Le sens de pose du tricot biélastique sur les zones à protéger est avantageusement tel que la direction du tricot ayant le taux d'allongement le plus important est parallèle à la direction de la contrainte la plus élevée agissant sur ladite zone.

Le tissu biélastique présente au moins l'une et de préférence l'ensemble des caractéristiques suivantes :
a) un taux d'allongement élastique d'au moins 8%,
b) une taille de maille inférieure ou égale à 150 mailles par décimètres, et de préférence 200 mailles par décimètres.

Par exemple, des essais effectués avec un tricot comportant 240 mailles par décimètre d'un côté, et 235 mailles par décimètre, de l'autre côté, ont permis l'obtention de résultats fort intéressants, notamment en terme de résistance à la fissuration.

De manière générale, le tricot biélastique selon l'invention est constitué de fibres synthétiques, de fibres naturelles ou d'un mélange de ces fibres. A titre de fibres synthétiques, le tricot biélastique selon l'invention peut comprendre au moins un type de fibres choisi parmi le polyamide 6, le polyamide 6,6 (nylon), les polyesters, etc.

Ainsi, de manière avantageuse, ledit tissu comprend au moins un matériau choisi parmi les polyamides, les polyesters, la rayonne, le coton, la laine, l'aramide, la soie, le lin.

Selon une variante de réalisation avantageuse, une certaine proportion de fils élastiques tels qu'en polyuréthane, latex, caoutchouc naturel ou synthétique peut s'avérer utile afin d'assurer le rappel élastique, ce qui permet de faciliter la mise en oeuvre du tissu. Ainsi, à titre de tricot biélastique selon l'invention, on peut citer le tricot commercialisé par Milliken sous la référence 2700 composé de 82% de fibre de polyamide 6 et de 18% de polyuréthane de 44 dTex.

Ledit tissu est avantageusement préencollé par un système adhésif. Selon un exemple de réalisation, ledit tissu est préencollé par un système adhésif, par exemple de type RFL (résorcine formol latex).

Le tissu ou tricot biélastique selon l'invention peut être utilisé brut, mais pour une meilleure adhésion à la structure de caoutchouc sur laquelle il est apposé, il est préférable de l'utiliser sous forme d'un tricot préencollé. La composition imprégnant le tissu ou tricot est en générale une composition compatible avec le caoutchouc. C'est à dire que la composition d'imprégnation est susceptible de co-vulcaniser avec une composition de caoutchouc, assurant ainsi une bonne cohésion entre ladite composition de caoutchouc et le tricot biélastique. La composition d'imprégnation selon l'invention peut être une résine, telle que notamment une résine de type RFL (résorcine formol latex).

L'applique est avantageusement fixée sur le pneumatique par incrustation dans une cavité de dimension appropriée ménagée à cet effet à la surface du pneumatique.

L'applique est fixée sur une partie de la surface radialement extérieure du pneumatique.

Le tissu ou tricot biélastique selon l'invention présente une épaisseur pouvant se situer entre 0,2 mm et 2 mm, et de préférence entre 0,4 et 1,2 mm.

Sa masse surfacique est généralement située entre 70 et 700 g/m2, et de préférence entre 140 et 410 g/m2.

L'applique est fixée sur une partie de la surface radialement intérieure du pneumatique.

Selon une variante de réalisation, le tricot biélastique est composée d'au moins un polymère choisi parmi les polymères thermodurcissable, les polymères thermoplastiques.

Selon un mode de réalisation avantageux, la couche supérieure de l'applique comprends au moins un matériau choisi parmi les matériaux plastiques, élastomériques, céramiques et métalliques, colorés ou non.

Selon un autre mode de réalisation avantageux, la couche supérieure de l'applique est constituée d'un revêtement de peinture ou de couche de vernis, coloré ou non.

Selon un autre mode de réalisation avantageux, la couche supérieure de l'applique comprend un élément choisi notamment parmi les capteurs, les puces électroniques, les faisceaux d'alimentation, les connecteurs, les antennes de réception, les antennes d'émission.

Selon une autre variante avantageuse, la couche supérieure de l'applique peut aussi être un motif visuel, configuré sur un matériau de type élastomère ou caoutchouc diénique, c'est-à-dire un élastomère issu d'au moins une partie de monomères diènes, ce motif pouvant être vu avec au moins une couleur différente de la couleur noire du matériau à base de caoutchouc. Un tel motif comprend, sur sa surface externe, au moins un réseau de diffraction de la lumière formé par une pluralité de nervures ou rainures de hauteur H et disposées parallèlement les unes aux autres avec un pas P.

Préférentiellement, le pas P est inférieur ou égal à 1.5 micron et la hauteur H est au plus égale à 1 micron, car l'effet de diffraction disparaît au-delà de ces limites. Plus préférentiellement, H est compris entre 0.1 et 0.3 micron et P est compris entre 0.5 et 0.7 micron ; encore plus préférentiellement, H est compris entre 0.17 et 0.23 micron et P est égal à 0.6 micron. Ces paramètres peuvent avantageusement être déterminés en fonction de l'indice optique du matériau sur lequel est formé ledit motif.

La présence du tissus est particulièrement importante pour ce type de réalisation, car il a été observé que les cires et agents anti-ozonant ou antioxydant ont tendance à migrer et à former une couche de protection sur la surface externe du pneu. Or, la présence d'une telle couche réduit l'effet optique produit par le réseau de diffraction. La présence du tissus protège le motif de ce type de migration, et le motif conserve ses propriétés visuelles.

L'invention concerne également un procédé de marquage d'une partie au moins de la surface d'un pneumatique, comprenant les étapes suivantes :
- l'apposition du marquage sur la surface supérieure d'une couche de tricot biélastique de dimension appropriée formant une applique,
- fixation de ladite applique, par collage de la surface inférieure de ladite couche de tricot biélastique sur la partie de la surface du pneumatique à marquer.

Le marquage comprend de préférence au moins un élément en un matériau choisi parmi les matériaux plastiques, élastomériques, céramiques et métalliques, coloré ou non.

Autrement, il peut comprendre au moins un revêtement choisi parmi couche de peinture, une couche de vernis, coloré ou non.

L'invention prévoit également un procédé de fixation d'un élément rigide sur une partie au moins de la surface d'un pneumatique, comprenant les étapes suivantes :
- la fixation de l'élément rigide sur la surface supérieure d'une couche de tricot biélastique de dimension appropriée formant ainsi une applique,
- la fixation de ladite applique, par collage de la surface inférieure de la couche de tricot biélastique sur la partie de la surface du pneumatique voulue.

L'élément rigide comprend de préférence au moins un élément choisi notamment parmi les capteurs, les puces électroniques, les faisceaux d'alimentation, les connecteurs, les antennes de réception, les antennes d'émission, les circuits électroniques.

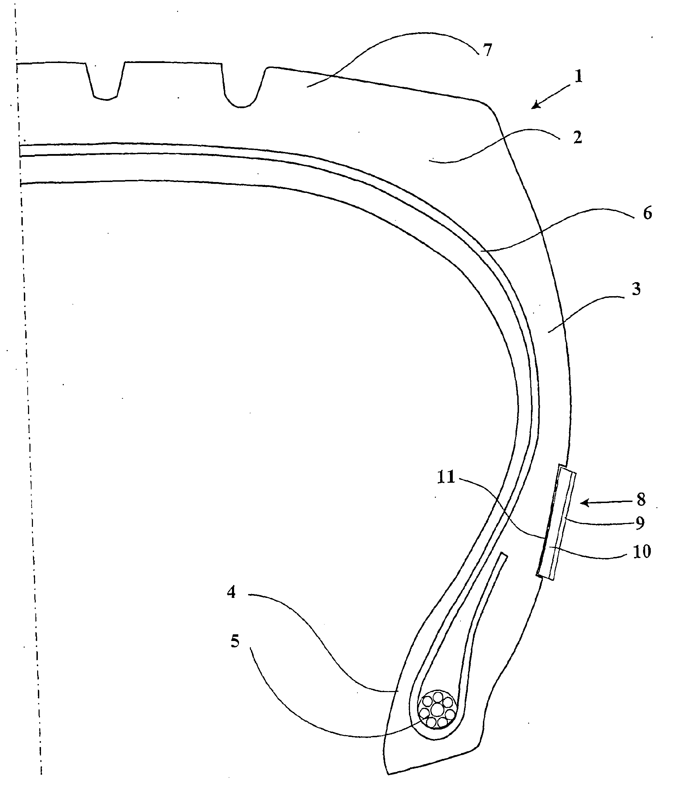

D'autres caractéristiques et avantages de l'invention apparaîtront à la lecture d'un exemple de réalisation d'un pneumatique conforme à l'invention, en référence au dessin annexé dans lequel la figure unique représente une demi coupe radiale d'un pneumatique portant un marquage conformément à l'invention, ainsi qu'à la lecture du procédé de fixation sur le pneumatique d'un revêtement et/ou d'un élément de marquage conforme à l'invention.

Dans le texte, on adoptera la terminologie "inférieure" pour désigner toute couche ou surface radialement orientée vers le pneumatique et "supérieure" pour désigner toute couche ou, surface radialement orientée à l'opposé du pneumatique, notamment une couche ou surface en contact avec l'air.

Le marquage d'un pneumatique constitue un aspect de l'invention. C'est aspect est décrit ici à titre purement exemplatif et ne saurait constituer une limitation de l'invention. L'homme de l'art comprendra que l'invention comprend également la fixation sur la surface du pneu d'un élément et/ou d'un revêtement destiné à d'autres fins que le marquage, tels que la fixation de dispositifs de contrôle, de mesure, etc.

Ainsi, à titre d'exemple, la figure annexée représente de manière schématique une demi coupe radiale d'un pneumatique 1 à armature de carcasse. Ce pneumatique 1 comporte sur la figure un sommet 2, un flanc 3, un bourrelet 4, une armature de carcasse 6 s'étendant d'un bourrelet à l'autre. Le sommet 2 est surmonté d'une bande de roulement 7. L'armature de carcasse 6 est enroulée autour des deux tringles 5 (une seule étant représentée sur la demi coupe de la figure) dans chaque bourrelet 4.

L'invention concerne ainsi un pneumatique 1 comprenant sur au moins une partie de sa surface au moins une applique 8 conforme à l'invention. La partie du pneumatique sur laquelle est fixée l'applique selon l'invention présente une composition de caoutchouc à base d'au moins un élastomère diénique essentiellement saturé, d'au moins un élastomère diénique essentiellement insaturé ou encore d'un mélange de ces deux types d'élastomères. La composition de caoutchouc peut contenir des additifs classiques et notamment les agents de protection contre l'ozone, l'oxydation, etc.

Par élastomère "diénique", on entend de manière connue un élastomère issu au moins en partie (i.e. un homopolymère ou un copolymère) de monomères diènes (monomères porteurs de deux doubles liaisons carbone-carbone, conjuguées ou non). Ces élastomères diéniques peuvent être classés dans deux catégories : "essentiellement insaturés" ou "essentiellement saturés".

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM (terpolymère éthylène-propylène-diène) n'entrent pas dans la définition précédente et peuvent être notamment qualifiés d'élastomères diéniques "essentiellement saturés" (taux de motifs d'origine diénique faible ou très faible, toujours inférieur à 15%).

Selon un mode de réalisation de l'invention, la partie du pneumatique sur laquelle est fixée l'applique selon l'invention est le flanc du pneumatique. La figure en annexe illustre ce mode de réalisation et plus particulièrement une fixation de l'applique 8 sur la partie radialement inférieure du flanc 3. La composition de cette partie du pneumatique peut alors contenir au moins un élastomère diénique essentiellement saturé, en particulier au moins un copolymère EPDM, que ce copolymère soit par exemple utilisé ou non en mélange avec un ou plusieurs des élastomères diéniques essentiellement insaturés.

Selon un autre mode de réalisation de l'invention, la partie du pneumatique sur laquelle est fixée l'applique selon l'invention est une gomme intérieure de pneumatique ou toute autre couche ou objet de la portion interne du pneumatique. La composition de cette partie du pneumatique peut alors contenir au moins un élastomère diénique essentiellement saturé de type copolymère d'isobutène et d'isoprène (caoutchouc butyle), ainsi que les versions halogénées de ces copolymères.

Selon encore un autre mode de réalisation de l'invention, la partie du pneumatique sur laquelle est fixée l'applique selon l'invention est la bande de roulement, notamment les fonds de sculpture de la bande de roulement. La composition de cette partie du pneumatique peut alors contenir au moins un élastomère diénique essentiellement insaturé.

Par référence à la figure, l'applique 8 conforme à l'invention comprend ainsi une première couche 9 en contact avec l'air constituant la couche supérieure de l'applique et une deuxième couche 10 en contact avec le pneumatique constituant la couche inférieure de l'applique. Cette couche inférieure 10 de l'applique est constituée d'un tricot élastique de faible densité apparente et très déformable. Il permet le découplage chimique et mécanique entre la surface du pneumatique et la couche supérieure de l'applique, constituant l'élément et/ou le revêtement de marquage.

La couche de tricot élastique composant la couche inférieure 10 de l'applique 8 selon l'invention, est constituée d'un tricot élastique de faible densité ayant un taux de vide élevé. Ceci permet une élasticité par glissement des fils et déformation des mailles, et également de s'opposer aux migrations chimiques et ainsi d'empêcher ou de très fortement limiter les migrations des agents tachants contenus dans le mélange élastomérique constitutif de la partie du pneumatique sur laquelle est fixée l'applique du pneumatique. En effet, le taux de vide élevé et la faible densité entraine une diminution de la section de passage et l'allongement du trajet tout au long fils du tricot et dans toute son épaisseur. Bien entendu, cet effet est également étroitement lié à l'épaisseur de la tricot élastique.

La limitation de la migration des agents tachants peut être renforcée par un choix judicieux du matériau constitutif de tricot élastique qui pourra présenter des caractéristiques d'imperméabilité du matériau vis-à-vis des migrants.

Par ailleurs, l'avantage d'un tricot élastique est clairement d'avoir suffisamment de souplesse de structure pour suivre les déformations du pneumatique.

On pourra ainsi choisir différentes natures de matériau pour former ce tricot élastique son épaisseur, son taux de vide et sa densité étant directement liées à ce choix et à la structure du tricot (diamètre du fil, nombre de mailles au dm et serrage.

De manière générale, la couche de tricot élastique pourra présenter une épaisseur d'au moins 1 mm. En dessous de cette valeur, les découplages chimiques et mécaniques ne seraient pas suffisants pour permettre un marquage durable de part son aspect et sa tenue.

De manière générale, lorsque l'applique est fixée sur une partie de la surface radialement extérieure du pneu, elle ne pourra saillir de plus de 3 mm de la surface du pneumatique. En effet, l'applique en saillie du pneumatique 1 au-delà de cette valeur de 3 mm augmenterait fortement le risque d'arrachage de ladite applique.

De manière générale, lorsque l'applique est fixée sur une partie de la surface radialement intérieure du pneu, notamment sur la gomme intérieure, elle pourra présenter une épaisseur bien supérieure à 3 mm. Mais, un poids trop important fixé sur l'intérieur du pneu aurait pour conséquence de le déséquilibrer trop fortement. Ainsi, l'épaisseur de l'applique dépendra également de la densité du tricot élastique et de la nature de la couche supérieure. A titre d'exemple, on pourra néanmoins envisager des appliques d'épaisseur allant jusqu'à environ 1 cm pour une fixation sur une partie de la surface radialement intérieure du pneu.

Selon un mode de réalisation avantageux de l'invention illustré par la figure, en vue d'un ancrage de l'applique 8 et donc d'une meilleure fixation de l'applique 8, celle-ci sera fixée dans une cavité 11 de dimension appropriée, ménagée à cet effet dans le pneumatique 1. Cette cavité qui présente une profondeur au plus égale à l'épaisseur de l'applique 8, est avantageusement formée lors du moulage du pneumatique 1.

De manière préférentielle, le tricot élastique pourra présenter une masse volumique d'au moins 0,02 g/cm3, mesurée de manière classique.

Le tricot élastique pourra de préférence présenter une masse volumique allant jusqu'à 0,50 g/cm3.

De manière générale, la rigidité du tricot élastique sera avantageusement inférieure à la rigidité du matériau de plus faible rigidité à découpler. Préférentiellement, cette différence devra être d'au moins 50 %. Encore plus préférentiellement, la rigidité du tricot élastique devra être au moins 3 fois plus petite que la rigidité du matériau de plus faible rigidité à découpler. La rigidité est exprimée par le module d'extension à 10% d'élongation, mesuré de manière classique.

Une autre caractéristique du tricot élastique utilisable dans le cadre de l'invention est son taux de vide. De manière générale selon l'invention, le taux de vide sera avantageusement d'au moins 40 % pour que le tricot soit suffisamment compressible. Ce taux de vide peut-être calculé en comparant la masse volumique du tricot avec celle du matériau compact constituant sa matrice, mesurée par tout moyen classique.

Le tricot constituant la couche inférieure de l'applique selon l'invention présentera l'une au moins des caractéristiques définies ci-dessus. Elle présentera avantageusement au moins deux de ces caractéristiques et, plus avantageusement encore, elle présentera les caractéristiques suivantes :
- un taux de vide d'au moins 40 %,
- une épaisseur d'au moins 1 mm,
- une masse volumique allant de 0,02 g/cm3 à 0,5 g/cm3. (à vérifier)

Néanmoins, les caractéristiques du tricot nommées ci-dessus dépendent également de la nature des matériaux pour former ce tricot. L'homme du métier saura déterminer les caractéristiques requises pour un matériau donné.

On pourra ainsi choisir un tricot biélastique pour lequel une masse volumique spécifique de 0,05 à 0,40 g/cm3 représente un bon compromis de travail.

Parmi les matériaux non élastomériques pouvant constituer la matrice de ces tricots, on peut citer :
- les fibres textiles naturelles, comme le coton, la laine, le lin, le chanvre, la soie, etc.
- les fibres textiles artificielles comme la rayonne;
- des fibres textiles synthétiques par exemple en polyesters, polyamides, aramides, polychlorure de vinyle, polyoléfines etc.
- des fibres minérales par exemple en verre, silice, ou laine de roche.

Parmi les matériaux élastomériques on peut citer:
- des fibres de caoutchoucs naturel, de polybutadiène, de SBR, de polyuréthane .

Selon une variante de réalisation, une peau recouvre le bord du tricot afin d'éviter des possibilités de pénétration d'eau lorsqu'il s'agit d'une applique sur la surface radialement extérieure du pneumatique. Cette peau est formée lors de la fabrication de l'applique ou appliquée ultérieurement.

Pour les applications intérieures au pneumatique, notamment sur la gomme intérieure, le tricot de découplage ne devra pas avoir de peau extérieure pour ne pas être soumis à une compression par l'air de gonflage.

L'élément et/ou le revêtement constituant la couche supérieure 9 de l'applique 8 à apposer sur le pneumatique 1, pourra se présenter sous forme :
- d'une couche souple que l'on veut découpler chimiquement pour éviter les migrations d'agents constitutifs de la composition de caoutchouc composant la partie du pneumatique sur laquelle l'élément et/ou le revêtement de marquage est apposé, et/ou découpler mécaniquement pour éviter tout délaminage, fissuration, etc. Ce peut-être une couche de mélange élastomérique, colorée ou non, une couche d'impression, etc.
- d'un élément rigide essentiellement décoratif, à découpler mécaniquement et éventuellement chimiquement. Il peut par exemple être constitué d'une couche de peinture rigide, d'une couche de vernis rigide, coloré ou non, d'une plaque, d'une feuille, d'un tricot, d'une nappe, d'un objet moulé, usiné, etc, en n'importe quel matériau élastomérique, plastique, céramique ou métallique, nu ou décoré ce qui permet le choix de n'importe quel motif ou couleur. Il apparaît avantageux d'effectuer le marquage avec des éléments dits rigides plutôt que mous, d'une part parce qu'il est possible d'obtenir des objets d'aspect durable par emboutissage, injection, etc. La rigidité de ces objets diminue sensiblement la mobilité moléculaire.
- d'un élément fonctionnel rigide tel que par exemple, comprenant notamment un dispositif électronique, tel qu'un capteur, une antenne ou une nappe de fils connexion permettant au pneumatique de recevoir ou transmettre des informations, avec ou sans patch de contact. On entend par patch de contact, la pastille ou socle, généralement élastomérique, sur laquelle ces éléments sont fixés, de manière amovible ou non, et qui permet la fixation de l'ensemble sur le pneumatique. De tels éléments sont connus de l'homme du métier. On peut citer à titre d'exemples, les éléments décrits dans EP 1 254 787, US 2002 0124934, EP 1 006167.

Le procédé de marquage d'une partie au moins de la surface d'un pneumatique 1 selon l'invention comprend les étapes suivantes :
- l'apposition du marquage 9 sur la partie supérieure d'une couche de tricot 10 de dimension appropriée formant ainsi un empilement que l'on appellera applique 8,
- fixation de ladite applique 8, par collage de la partie inférieure de ladite couche de tricot 10 sur la partie de la surface du pneumatique 1 à marquer.

Par apposition du marquage, élément et/ou revêtement, on entend la fixation par tout moyen approprié de ce marquage sur le tricot, tels que notamment la décalcomanie, le collage, le thermocollage, etc.

Le procédé de fixation d'un élément rigide, autre qu'un marquage, sur une partie au moins de la surface d'un pneumatique et analogue. Il comprend les étapes de fixation, généralement par collage, de l'élément rigide sur la partie supérieure d'une couche de tricot de dimension appropriée formant une applique, et de fixation de ladite applique, par collage de la partie inférieure de la couche de tricot sur la partie de la surface du pneumatique voulue.

Divers procédés de collage peuvent être utilisés pour le collage de la couche de tricot 10 sur la surface de pneumatique 1, ainsi que pour le collage de la couche supérieure 9 de l'applique 8 (marquage ou autre élément à fixer) sur la couche de tricot 10.

Pour le collage du tricot sur la surface du pneumatique, la colle devra être élastomérique pour pouvoir suivre les déformations du pneumatique.

Pour le collage de la couche supérieure 9 de l'applique 8 sur la couche de tricot 10, la rigidité de la colle a moins d'importance car la surface supérieure de la couche de tricot 10 en contact avec la couche supérieure 9 de l'applique 8 est peu ou pas déformée.

Pour simplifier la pose, on peut avantageusement utiliser une même colle permettant de constituer une surface adhésive réactivable thermiquement.

Par exemple, on peut utiliser un latex de polyuréthane autoréticulable tel que celui commercialisée par la société AVECIA sous le nom commercial "NEO-REZ R-550 ", en déposant ce dernier sur chacune des surfaces à assembler (surface du pneumatique, les deux surfaces de la couche de tricot et la surface inférieure de la couche supérieure de l'applique). Notons que pour les surfaces ne possédant pas directement de fonctions polaires capables de se lier chimiquement avec le polyuréthane, il faut prévoir un traitement intermédiaire par exemple avec une solution à base d'acide trichloro-isocyanurique (TIC) à 2 ou 3% dans un solvant organique, généralement l'acétate d'éthyle.

On fait ainsi subir un traitement à la surface du pneumatique vulcanisé afin de rendre polaire et fonctionnaliser les élastomères de cette surface. On applique sur cette surface traitée au moins une couche constituée par une dispersion aqueuse de polyuréthane et on laisse sécher cette couche. L'application de la dispersion aqueuse de polyuréthane peut être réalisée à température ambiante. Ainsi ce procédé peut aisément être mis en oeuvre sur le pneumatique vulcanisé et ceci, sans nécessiter par ailleurs, d'opération de chauffage bien qu'il soit possible par une élévation modérée de la température à la surface du pneumatique d'accélérer les opérations de séchage.

On peut également utiliser un adhésif acrylique ou polychloroprène.

Avec un tricot suffisamment serré, il peut être envisageable de poser le tricot ou l'applique à cru de manière à ce que lors de la cuisson, les mélanges du pneumatique pénètrent sur une certaine épaisseur et assure un ancrage mécanique.

Dans ce cas, on peut aussi imaginer que le tricot soit préencollé à l'aide d'un adhésif traditionnel de l'industrie du pneumatique, de type RFL (Résorcine/Formol/Latex) par exemple, de façon à renforcer l'ancrage mécanique.

## Revendications

1. Pneumatique (1) comprenant sur au moins une partie de sa surface au moins une applique (8), composée d'une première couche (9) en contact avec l'air constituant la couche supérieure de l'applique et d'une deuxième couche (10) en contact avec le pneumatique (1) constituant la couche inférieure de l'applique (8), ladite couche inférieure (10) de l'applique étant constituée d'un tissu biélastique, **caractérisé en ce que** ledit tissu utilisé est un tricot biélastique, soit un tissu à mailles dont les boucles formant les mailles sont susceptibles de se déplacer les unes par rapport aux autres dans le sens du tricotage et dans le sens perpendiculaire au tricotage.

2. Pneumatique selon la revendication 1, dans lequel le tissu biélastique présente au moins l'une et de préférence l'ensemble des caractéristiques suivantes :
- un taux d'allongement élastique d'au moins 8%,
- une taille de maille inférieure ou égale à 150 mailles par décimètres, et de préférence 200 mailles par décimètres.

3. Pneumatique selon l'une des revendications précédentes, dans lequel ledit tissu comprend au moins un matériau choisi parmi les polyamides, les polyesters, la rayonne, le coton, la laine, l'aramide, la soie, le lin.

4. Pneumatique selon l'une des revendications précédentes, dans lequel le tissu comprend une certaine proportion de fils élastiques.

5. Pneumatique selon l'une des revendications précédentes, dans lequel ledit tissu est préencollé par un système adhésif.

6. Pneumatique selon l'une quelconque des revendications 1 à 5, **caractérisé en ce que** l'applique (8) est fixée sur le pneumatique (1) par incrustation dans une cavité (11) de dimension appropriée ménagée à cet effet à la surface du pneumatique.

7. Pneumatique selon l'une des revendications 1 à 5, **caractérisé en ce que** l'applique (8) est fixée sur une partie de la surface radialement extérieure du pneumatique.

8. Pneumatique selon l'une des revendications précédentes, **caractérisé en ce que** le tissu ou tricot présente une épaisseur pouvant se situer entre 0,2 mm et 2 mm, et de préférence entre 0,4 et 1,2 mm.

9. Pneumatique selon l'une des revendications précédentes, **caractérisé en ce que** le tissu ou tricot présente une masse surfacique généralement située entre 70 et 700 g/m2, et de préférence entre 140 et 410 g/m2.

10. Pneumatique selon l'une des revendications 1 à 9, **caractérisé en ce que** le tricot biélastique est composée d'au moins un polymère choisi parmi les polymères thermodurcissable, les polymères thermoplastiques.

11. Pneumatique selon l'une des revendications 1 à 10, **caractérisé en ce que** la couche supérieure (9) de l'applique (8) comprend au moins un matériau choisi parmi les matériaux plastiques, élastomériques, céramiques et métalliques, colorés ou non.

12. Pneumatique selon l'une des revendications 1 à 10, **caractérisé en ce que** la couche supérieure (9) de l'applique (8) est constituée d'un revêtement de peinture ou de couche de vernis, coloré ou non.

13. Pneumatique selon l'une des revendications 1 à 10, **caractérisé en ce que** la couche supérieure (9) de l'applique (8) comprend un élément choisi notamment parmi les capteurs, les puces électroniques, les faisceaux d'alimentation, les connecteurs, les antennes de réception, les antennes d'émission.

14. Procédé de marquage d'une partie au moins de la surface d'un pneumatique (1), **caractérisé en ce qu'**il comprend les étapes suivantes :
• l'apposition du marquage (9) sur la surface supérieure d'une couche de tricot biélastique (10) de dimension appropriée formant une applique (8),
• fixation de ladite applique (8), par collage de la surface inférieure de ladite couche de tricot biélastique (10) sur la partie de la surface du pneumatique (1) à marquer.

15. Procédé de marquage selon la revendication 14, **caractérisé en ce que** le marquage (9) comprend au moins un élément en un matériau choisi parmi les matériaux plastiques, élastomériques, céramiques et métalliques, coloré ou non.

16. Procédé de marquage selon la revendication 14, **caractérisé en ce que** le marquage (9) comprend au moins un revêtement choisi parmi une couche de peinture, une couche de vernis, coloré ou non.

17. Procédé de fixation d'un élément rigide sur une partie au moins de la surface d'un pneumatique, **caractérisé en ce qu'**il comprend les étapes suivantes :
• la fixation de l'élément rigide sur la surface supérieure d'une couche de tricot biélastique de dimension appropriée formant ainsi une applique,
• la fixation de ladite applique, par collage de la surface inférieure de la couche de tricot biélastique sur la partie de la surface du pneumatique voulue.

18. Procédé de fixation d'un élément rigide selon la revendication 17, **caractérisé en ce que** l'élément rigide comprend au moins un élément choisi notamment parmi les capteurs, les puces électroniques, les faisceaux d'alimentation, les connecteurs, les antennes de réception, les antennes d'émission, les circuits électroniques.

## Claims

1. A tyre (1) comprising over at least part of its surface at least one applique (8), consisting of a first layer (9) in contact with the air and constituting the upper layer of the applique and a second layer (10) in contact with the tyre (1) and constituting the lower layer of the applique (8), said lower layer (10) of the applique consisting of a bielastic fabric, **characterised in that** the fabric used is a bielastic knitted fabric, i.e. a mesh fabric of which the loops which form the mesh are capable of moving relative to one another in the knit direction and perpendicular to the knit direction.

2. A tyre according to claim 1, in which the bielastic fabric exhibits at least one and preferably all of the following characteristics:
- an elastic elongation rate of at least 8%,
- a mesh size less than or equal to 150 loops per decimetre, and preferably 200 loops per decimetre.

3. A tyre according to one of the preceding claims, in which said fabric comprises at least one material selected from among polyamides, polyesters, rayon, cotton, wool, aramid, silk and linen.

4. A tyre according to one of the preceding claims, in which the fabric comprises a certain proportion of elastic threads.

5. A tyre according to one of the preceding claims, in which said fabric is preglued with an adhesive system.

6. A tyre according to any one of claims 1 to 5, **characterised in that** the applique (8) is attached to the tyre (1) by insertion in a cavity (11) of a suitable size formed to this end at the surface of the tyre.

7. A tyre according to one of claims 1 to 5, **characterised in that** the applique (8) is attached to a part of the radially outer surface of the tyre.

8. A tyre according to one of the preceding claims, **characterised in that** the fabric or knitted fabric exhibits a thickness which may be between 0.2 mm and 2 mm, and preferably between 0.4 and 1.2 mm.

9. A tyre according to one of the preceding claims, **characterised in that** the fabric or knitted fabric exhibits a mass per unit area generally between 70 and 700 g/m2, and preferably between 140 and 410 g/m2.

10. A tyre according to one of claims 1 to 9, **characterised in that** the bielastic knitted fabric is composed of at least one polymer selected from among thermosetting and thermoplastic polymers.

11. A tyre according to one of claims 1 to 10, **characterised in that** the upper layer (9) of the applique (8) comprises at least one material selected from among plastics, elastomeric, ceramic and metallic materials, coloured or not.

12. A tyre according to one of claims 1 to 10, **characterised in that** the upper layer (9) of the applique (8) consists of a coating of paint or a coat of lacquer, coloured or not.

13. A tyre according to one of claims 1 to 10, **characterised in that** the upper layer (9) of the applique (8) comprises an element selected in particular from among sensors, electronic chips, supply harnesses, connectors, receiving antennas and emitting antennas.

14. A process of marking a part at least of the surface of a tyre (1), **characterised in that** it comprises the following steps:
• affixing the marking (9) to the upper surface of a layer of bielastic knitted fabric (10) of suitable size forming an applique (8),
• attaching said applique (8), by adhesive bonding of the lower surface of said layer of bielastic knitted fabric (10), to the part of the surface of the tyre (1) to be marked.

15. A marking process according to claim 14, **characterised in that** the marking (9) comprises at least one element of a material selected from among plastics, elastomeric, ceramic and metallic materials, coloured or not.

16. A marking process according to claim 14, **characterised in that** the marking (9) comprises at least one coating selected from among a coat of paint or a coat of lacquer, coloured or not.

17. A process of attaching a rigid element to a part at least of the surface of a tyre, **characterised in that** it comprises the following steps:
• attaching the rigid element to the upper surface of a layer of bielastic knitted fabric of suitable size, thus forming an applique,
• attaching said applique, by adhesive bonding of the lower surface of the layer of bielastic knitted fabric, to the desired part of the surface of the tyre.

18. A process of attaching a rigid element according to claim 17, **characterised in that** the rigid element comprises at least one element selected in particular from among sensors, electronic chips, supply harnesses, connectors, receiving antennas, emitting antennas and electronic circuits.

## Patentansprüche

1. Reifen (1), der auf wenigstens einem Abschnitt seiner Oberfläche wenigstens ein Oberflächenelement (8) aufweist, das aus einer ersten Schicht (9), die mit der Luft in Kontakt ist und die obere Schicht des Oberflächenelements bildet, und einer zweiten Schicht (10), die mit dem Reifen (1) in Kontakt ist und die untere Schicht des Oberflächenelements (8) bildet, aufgebaut ist, wobei die untere Schicht (10) des Oberflächenelements aus einem bielastischen Gewebe gebildet ist, **dadurch gekennzeichnet, dass** das verwendete Gewebe ein bielastisches Gewirke ist, nämlich ein Maschengewebe, dessen Schlingen, die die Maschen bilden, sich in Richtung des Wirkens und in der dazu senkrechten Richtung in Bezug zueinander verlagern können.

2. Reifen nach Anspruch 1, bei dem das bielastische Gewebe wenigstens eines und vorzugsweise sämtliche der folgenden Merkmale aufweist:
- einen Grad elastischer Dehnung von wenigstens 8 %,
- eine Maschenweite kleiner oder gleich 150 Maschen pro Dezimeter und vorzugsweise 200 Maschen pro Dezimeter.

3. Reifen nach einem der vorhergehenden Ansprüche, bei dem das Gewebe wenigstens ein Material umfasst, das aus Polyamiden, Polyestern, Rayon, Baumwolle, Wolle, Aramid, Seide und Leinen ausgewählt ist.

4. Reifen nach einem der vorhergehenden Ansprüche, bei dem das Gewebe einen bestimmten Anteil an elastischen Fäden aufweist.

5. Reifen nach einem der vorhergehenden Ansprüche, bei dem das Gewebe durch ein Klebesystem vorgekleistert ist.

6. Reifen nach einem der Ansprüche 1 bis 5, **dadurch gekennzeichnet, dass** das Oberflächenelement (8) durch Eindrücken in eine Austiefung (11) geeigneter Abmessung, die dazu an der Oberfläche des Reifens (1) ausgebildet worden ist, befestigt ist.

7. Reifen nach einem der Ansprüche 1 bis 5, **dadurch gekennzeichnet, dass** das Oberflächenelement (8) an einem Abschnitt der radial äußeren Oberfläche des Reifens befestigt ist.

8. Reifen nach einem der vorhergehenden Ansprüche, **dadurch gekennzeichnet, dass** das Gewebe oder Gewirke eine Dicke aufweist, die im Bereich zwischen 0,2 mm und 2 mm und vorzugsweise im Bereich zwischen 0,4 und 1,2 mm liegen kann.

9. Reifen nach einem der vorhergehenden Ansprüche, **dadurch gekennzeichnet, dass** das Gewebe oder Gewirke eine flächenbezogene Masse aufweist, die im Allgemeinen im Bereich zwischen 70 und 700 g/m² und vorzugsweise im Bereich zwischen 140 und 410 g/m² liegen kann.

10. Reifen nach einem der Ansprüche 1 bis 9, **dadurch gekennzeichnet, dass** das bielastische Gewirke aus wenigstens einem Polymer zusammengesetzt ist, das unter den duroplastischen Polymeren und den thermoplastischen Polymeren ausgewählt ist.

11. Reifen nach einem der Ansprüche 1 bis 10, **dadurch gekennzeichnet, dass** die obere Schicht (9) des Oberflächenelements (8) wenigstens ein Material umfasst, das unter den farbigen oder nicht farbigen plastischen, elastomeren, keramischen und metallischen Materialien ausgewählt ist.

12. Reifen nach einem der Ansprüche 1 bis 10, **dadurch gekennzeichnet, dass** die obere Schicht (9) des Oberflächenelements (8) aus einem farbigen oder nicht farbigen Farb- oder Lackschichtüberzug gebildet ist.

13. Reifen nach einem der Ansprüche 1 bis 10, **dadurch gekennzeichnet, dass** die obere Schicht (9) des Oberflächenelements (8) ein Element umfasst, das insbesondere aus Sensoren, Mikrochips, Versorgungsbündeln, Verbindungselementen, Empfangsantennen und Sendeantennen ausgewählt ist.

14. Verfahren zur Kennzeichnung wenigstens eines Abschnitts der Oberfläche eines Reifens (1), **dadurch gekennzeichnet, dass** es die folgenden Schritte umfasst:
• Anbringen der Kennzeichnung (9) an der oberen Oberfläche einer Schicht aus bielastischem Gewirke (10) geeigneter Abmessung, die ein Oberflächenelement (8) bildet,
• Befestigen des Oberflächenelements (8) durch Kleben der unteren Oberfläche der Schicht aus bielastischem Gewirke (10) auf den zu kennzeichnenden Abschnitt der Oberfläche des Reifens (1).

15. Verfahren zur Kennzeichnung nach Anspruch 14, **dadurch gekennzeichnet, dass** die Kennzeichnung (9) wenigstens ein Element aus einem Material umfasst, das unter den farbigen oder nicht farbigen plastischen, elastomeren, keramischen und metallischen Materialien ausgewählt ist.

16. Verfahren zur Kennzeichnung nach Anspruch 14, **dadurch gekennzeichnet, dass** die Kennzeichnung (9) wenigstens einen Überzug umfasst, der unter einer farbigen oder nicht farbigen Farbschicht oder Lackschicht ausgewählt ist.

17. Verfahren zur Befestigung eines steifen Elements an wenigstens einem Abschnitt der Oberfläche eines Reifens, **dadurch gekennzeichnet, dass** es die folgenden Schritte umfasst:
• Befestigen des steifen Elements an der oberen Oberfläche einer Schicht aus bielastischem Gewirke geeigneter Abmessung, die somit ein Oberflächenelement bildet,
• Befestigen des Oberflächenelements durch Kleben der unteren Oberfläche der Schicht aus bielastischem Gewirke auf den gewünschten Abschnitt der Oberfläche des Reifens.

18. Verfahren zur Befestigung nach Anspruch 17, **dadurch gekennzeichnet, dass** das steife Element wenigstens ein Element umfasst, das insbesondere unter den Sensoren, den Mikrochips, den Versorgungsbündeln, den Verbindungselementen, den Empfangsantennen, den Sendeantennen und den elektronischen Schaltungen ausgewählt ist.
